# DEMANDE DE BREVET EUROPEEN

(11) **EP 0 539 904 A1**
(43) Date de publication de la demande: **05.05.1993**
(21) Numéro de dépôt: 92118275.4
(22) Date de dépôt: 26.10.1992
(51) Int. Cl.: B61D 17/02, B61H 11/10

(54) **Train à grande vitesse comprenant des moyens de modification de son profil aérodynamique**

(30) Priorité: 31.10.1991 FR 9113510
(71) Demandeur: GEC ALSTHOM SA, F-75116 Paris (FR)
(72) Inventeur: Chappet, Philippe, F-90000 Cravanche (FR); Girard, Hervé, F-17000 La Rochelle (FR); Teissier, Jean-Luc, F-13700 Marignane (FR)
(74) Mandataire: Weinmiller, Jürgen

(57) **Abrégé**

L'invention concerne un train à grande vitesse comprenant des moyens permettant de réduire la résistance à l'avancement engendrée par des cavités présentes sur sa surface extérieure, caractérisé en ce que ces moyens comprennent, pour une cavité (1), au moins un profil disposé à proximité de la cavité. Ce profil est constitué par un aileron (4, 5) pouvant éventuellement se transformer en aérofrein par basculement autour d'un axe.

## Description

La présente invention concerne un train à grande vitesse comprenant des moyens de modification de son profil aérodynamique, en particulier pour modifier la résistance à l'avancement engendrée par des cavités présentes sur sa surface extérieure.

Pour augmenter encore la vitesse des trains circulant à grande vitesse, on cherche à remédier à tout ce qui peut diminuer l'aérodynamisme des trains. Ainsi, on recherche les profils les plus aérodynamiques possibles. Cependant, la surface extérieure d'un train présente différentes cavités (césures entre voitures, logement des pantographes, logement des bogies sous caisse) qui constituent autant d'obstacles à l'avancement du train et augmentent le niveau de bruit.

On a déjà tenté de résoudre ces problèmes en plaçant des bavettes en caoutchouc entre les voitures, ce qui assure la continuité aérodynamique mais condamne l'accessibilité aux appareils. En outre, ces dispositifs sont peu fiables dans le temps et augmentent la durée des interventions des services d'entretien. Il en est de même pour les logements de bogies et de pantographes où des systèmes de carénage fixes ou mobiles viennent masquer les cavités. Ces carénages cachent les appareils au détriment de la sécurité.

Les problèmes présentés par ce type de cavités ne sont donc pas pour l'instant résolus de manière satisfaisante.

La demanderesse a donc effectué un certain nombre de travaux à ce sujet et des études théoriques ont été menées à l'Institut de Mécanique des Fluides de Marseille dans le laboratoire du Professeur Jean-Pierre GUIBERGIA et de son assitant Xavier BONNARDEL. Ainsi, on a découvert que l'utilisation de profils situés à proximité de ces cavités permet de réduire la traînée des trains et par conséquent d'augmenter leur vitesse à puissance de traction égale. On a également découvert que l'utilisation de ces profils permet de diminuer les fluctuations de pression à l'intérieur des cavités, ainsi, que le niveau acoustique aussi bien à l'intérieur qu'à l'extérieur des trains.

L'augmentation continue de la vitesse de croisière des trains pose cependant le problème de leur freinage. Il est prévu en effet d'atteindre des vitesses commerciales de l'ordre de 400 km/h. A cette vitesse, étant donné la grande énergie à dissiper et la faible adhérence existant entre les roues du train et les rails, les systèmes de freinage utilisés actuellement sur les trains sont insuffisants.

Pour les rames du TGV atteignant des vitesses de l'ordre de 270 km/h, trois moyens de freinage sont prévus :
- d'abord un frein rhéostatique monté sur les essieux moteurs et un frein à disque monté sur les essieux porteurs, ces freins étant utilisés conjointement pour amener le train de la vitesse maximale jusqu'à l'arrêt,
- ensuite un frein utilisant des semelles sur roues sur les bogies moteurs, ce frein étant utilisé en-dessous de 160 km/h.

Ces systèmes de freinage peuvent sans doute être perfectionnés mais le freinage reste un problème difficile à résoudre. Une contribution importante au freinage à haute vitesse peut alors être apportée par les profils disposés à proximité des cavités. Si on fait passer les profils de la position parallèle à la surface extérieure du train (donc à la direction de déplacement) à une position perpendiculaire à cette surface (donc à la direction de déplacement), on obtient des aérofreins, système de freinage particulièrement efficace aux grandes vitesses. En outre, les profils ne réalisant plus leur fonction première, les cavités de la surface extérieure du train deviennent à nouveau autant d'obstacles à l'avancement.

Selon l'invention, il est maintenant proposé un train à grande vitesse comprenant des moyens permettant de réduire la résistance à l'avancement engendrée par des cavités présentes sur sa surface extérieure, caractérisé en ce que ces moyens comprennent, pour une cavité, au moins un profil disposé à proximité de la cavité mais pas en face de cette cavité, le profil étant maintenu à une distance déterminée de la surface extérieure du train, cette distance déterminée permettant de réduire ladite résistance de l'avancement.

Le profil est avantageusement constitué par un aileron disposé parallèlement à la surface extérieure du train.

L'aileron a de préférence une longueur correspondant à la longueur que présente la cavité à l'avancement du train. Ceci présente l'avantage de procurer une efficacité maximale au profil.

De préférence, la cavité est équipée de deux ailerons, chaque aileron étant situé de part et d'autre de cette cavité. Ceci permet de diminuer la traînée de la cavité dans les deux sens de marche du train. En outre, l'aileron situé en amont de la cavité diminue la traînée de l'aileron situé en aval et donc améliore le rendement de l'ensemble.

Selon une variante particulièrement intéressante de l'invention, il est prévu des moyens de commande de l'aileron vers une position perpendiculaire à la surface extérieure du train pour constituer un aérofrein. Ces moyens de commande peuvent comprendre des vérins.

L'invention sera mieux comprise et d'autres avantages et particularités apparaîtront à la lecture de la description qui va suivre, donnée à titre non limitatif et accompagnée des dessins annexés parmi lesquels :
- la figure 1 représente la jonction de deux véhicules ferroviaires sur un train à grande vitesse avec utilisation d'un profil selon l'invention,
- la figure 2 représente une vue de dessus correspondant à la jonction représentée à la figure 1,
- la figure 3 illustre le fonctionnement en aérofrein de l'aileron selon une variante de l'invention.

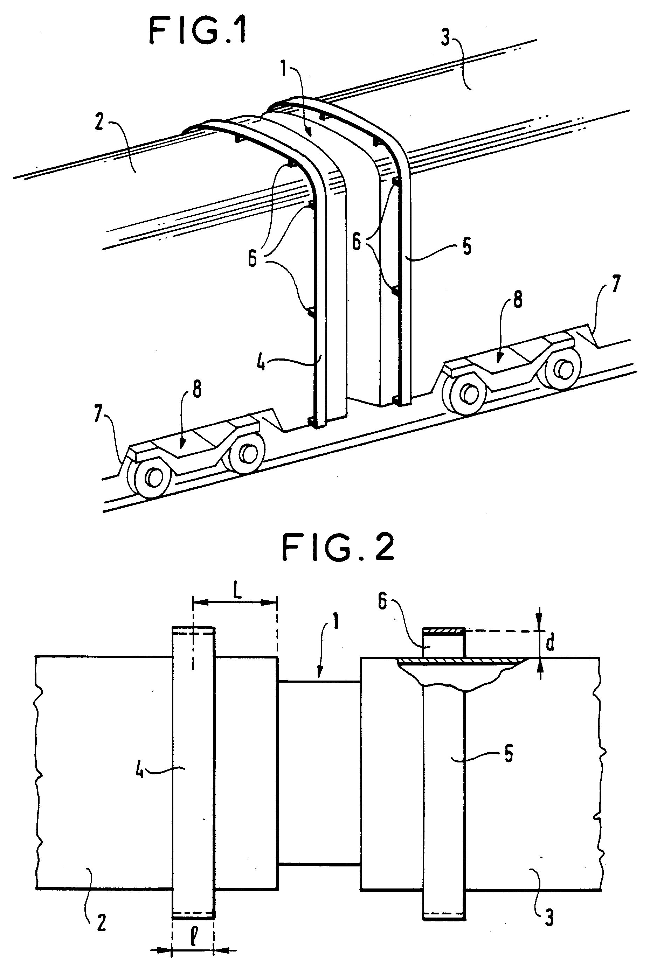

Sur la figure 1, on a représenté la césure 1 existant entre la motrice 2 et la remorque 3 d'un train type TGV. Des ailerons 4 et 5 sont disposés de part et d'autre de la césure. Ils sont disposés parallèlement à la surface extérieure du train et sont maintenus à une certaine distance de la paroi par des supports 6. Dans le cas où la fonction des ailerons consiste uniquement à diminuer la résistance à l'avancement ils peuvent être fixés de façon permanente aux supports, par exemple par soudure ou par rivetage. Les supports peuvent eux-mêmes être fixés aux véhicules par soudure ou par rivetage. Les ailerons et leurs supports peuvent être dans le même matériau que celui utilisé pour réaliser les caisses des véhicules.

Il est avantageux que la longueur des ailerons correspondent à la longueur de la césure. Ainsi dans le cas représenté à la figure 1, un aileron a la forme d'un U renversé sur la caisse d'un véhicule. Les ailerons peuvent être réalisés en une seule partie ou en plusieurs parties mises bout à bout.

Des ailerons peuvent éventuellement être disposés de part et d'autre des logements 7 des bogies 8. Il en va de même pour les autres cavités existant à la surface extérieure du train et en particulier sur le toit.

Il est préférable d'utiliser les ailerons en tandem pour une même cavité. Ceux-ci permettent de diminuer la traînée de la cavité dans les deux sens de la marche du train.

Les dimensions des ailerons et leur écartement des caisses peuvent être optimisés par le calcul selon les théories de l'aérodynamique et surtout par les essais en soufflerie.

A titre d'exemple et en référence à la figure 2, pour une césure 1 entre la motrice 2 et la remorque 3, l'écartement d entre un aileron et le véhicule qui le supporte peut être de 20 cm, la largeur l de l'aileron peut être de 15 cm, son épaisseur 1 cm et sa distance moyenne L par rapport au bord de la césure 1 m.

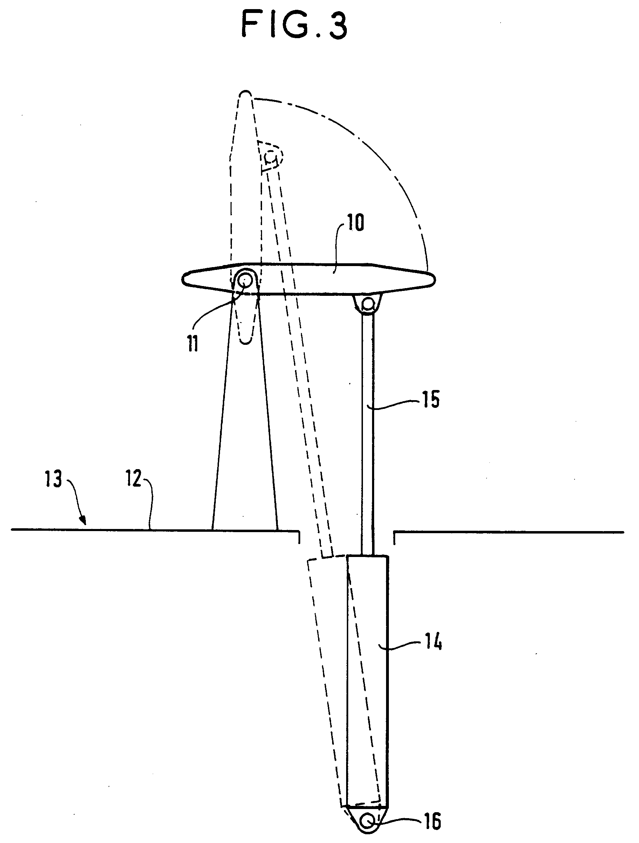

Pour une utilisation de l'aileron en aérofrein, il faut bien sûr que l'aileron puisse être rendu mobile. La figure 3 illustre un fonctionnement possible de l'aileron en aérofrein. Dans ce cas, l'aileron 10 est monté sur un axe 11 et est mobile autour de cet axe. L'axe est maintenu par des supports à la paroi 12 du véhicule 13. Les supports d'axe peuvent être disposés aux extrémités de l'aileron. Ils peuvent également être disposés régulièrement entre ces extrémités grâce à des encoches pratiquées dans l'aileron.

Un vérin 14 (ou plusieurs) est logé dans la paroi de la caisse du véhicule. L'extrémité libre de son piston 15 est articulée à l'aileron 10 du côté opposé à l'axe 11. Le piston 14 est articulé autour d'un axe 16 fixe par rapport à la paroi 12 et parallèle à l'axe 11 lui permet un certain débattement. Le vérin et son piston participent également à la tenue mécanique de l'aileron.

En position manipulateur de couche limite, l'aileron est maintenu parallèle à la paroi 12 ou sensiblement parallèle de façon à jouer son rôle.

Par commande du vérin, on place l'aileron en position perpendiculaire par rapport à l'axe général du train de manière à obtenir un aérofrein. Cette position ainsi que la position correspondante du vérin et de son piston sont indiquées en traits interrompus.

## Revendications

1. Train à grande vitesse comprenant des moyens permettant de réduire la résistance à l'avancement engendrée par des cavités présentes sur sa surface extérieure, caractérisé en ce que ces moyens comprennent, pour une cavité (1), au moins un profil disposé à proximité de la cavité mais pas en face de cette cavité, le profil étant maintenu à une distance déterminée de la surface extérieure du train, cette distance déterminée permettant de réduire ladite résistance à l'avancement.

2. Train à grande vitesse selon la revendication 1, caractérisé en ce que le profil est constitué par un aileron (4, 5) disposé parallèlement à la surface extérieure du train.

3. Train à grande vitesse selon la revendication 2, caractérisé en ce que l'aileron a une longueur correspondant à la longueur que présente la cavité à l'avancement du train.

4. Train à grande vitesse selon l'une des revendications 2 ou 3, caractérisé en ce qu'il existe deux ailerons (4, 5) par cavité, chaque aileron étant situé de part et d'autre de cette cavité (1).

5. Train à grande vitesse selon l'une quelconque des revendications 2 à 4, caractérisé en ce qu'il est prévu des moyens de commande de l'aileron (10) ou des ailerons vers une position perpendiculaire à la surface extérieure du train pour constituer un aérofrein.

6. Train à grande vitesse selon la revendication 5, caractérisé en ce que lesdits moyens de commande comprennent des vérins (14).
